# DEMANDE DE BREVET EUROPEEN

(11) **EP 1 284 408 A1**
(43) Date de publication de la demande: **19.02.2003**
(21) Numéro de dépôt: 01119882.7
(22) Date de dépôt: 17.08.2001
(51) Int. Cl.: G01B 5/24, G05B 19/401

(54) **Procédé et dispositif de mesure de cônes externes**

(71) Demandeur: SIP, Société Genevoise d'Instruments de Physique, 1242 Satigny (CH)
(72) Inventeur: Jaques, Raymond, 1203 Genève (CH); Agier, Dominique Etienne, 1217 Meyrin (CH)
(74) Mandataire: Micheli & Cie

(57) **Abrégé**

La présente invention concerne un procédé et un dispositif de mesure de tous les types de cônes externes (1) et en particulier les cônes de porte-outil de type ISO et HSK tels que définis dans les normes ISO 297, ISO 7388/1 et DIN 69893-1, permettant de mesurer sans reprise deux diamètres du cône externe, la distance entre ces deux et la distance par rapport à la position d'un plan de référence (5) du cône. Il est ainsi possible de calculer l'angle du cône (A), la position du plan de jauge (6) du cône et la position relative de la surface conique par rapport au plan de jauge (6), ce qui détermine tous les caractéristiques d'un cône externe.

## Description

La présente invention a pour objet un procédé et un dispositif de mesure de tous les types de cônes externes et en particulier les cônes de porte-outil de type ISO et HSK tels que définis dans les normes ISO 297, ISO 7388/1 et DIN 69893-1. Le procédé permet de mesurer deux diamètres du cône externe, la distance entre ces deux et la distance par rapport à la position d'un plan de référence du cône externe. Il est ainsi possible de déterminer la conicité, la position du plan de jauge du cône et la position relative de la surface conique par rapport au plan de jauge, ce qui détermine toutes les caractéristiques d'un cône d'outils.

Il est important de connaître de manière précise les caractéristiques des cônes externes pour certaines applications. Par exemple les cônes de porte-outils ISO ou les cônes HSK utilisés dans les broches à grande vitesse doivent d'abord être fabriqués avec une haute précision et, après fabrication, il est nécessaire de vérifier leurs caractéristiques avec une procédure adaptée.

On connaît des procédés de mesure de cônes extérieurs destinés à assurer cette fonction. Beaucoup des méthodes conventionnelles prévoient, à cause de la géométrie spécifique de la pièce à mesurer, une reprise de la pièce sur son support afin de déterminer tous les paramètres nécessaires du cône. Ceci est un inconvénient important dans le sens où cette reprise présente une limite à la précision de la mesure. En plus, le dispositif de mesure doit comprendre un appareil pour reprendre la pièce et la repositionner.

Il existe aussi une méthode de mesure d'un cône externe sans reprise de la pièce. On utilise à cet effet une table sinus sur laquelle la pièce est posée, et qui permet d'incliner la pièce à mesurer et ainsi de varier la position de la pièce par rapport à l'instrument de mesure afin de mesurer le diamètre du cône à différents endroits le long de l'axe du cône. Comme la variation de la position réalisée par une inclinaison de la pièce ne se fait pas dans une direction parallèle à l'axe du cône, cette procédure comprend alors les désavantages d'un calcul des diamètres et de la distance les séparant compliqué et d'un dispositif de mesure compliqué. A cause de la même raison, une telle méthode présente également des limites de précision de mesure.

Le but de la présente invention est de réaliser un procédé tendant à obvier aux inconvénients précités des méthodes actuelles et permettant la mesure de cônes externes sans reprise de la pièce, avec une très haute précision et par un procédé ainsi qu'un dispositif de mesure simple.

La présente invention a pour objet un procédé et un dispositif de mesure de cônes externes et se distingue par les caractéristiques énoncées à la revendication 1. D'autres avantages ressortent des caractéristiques exprimées dans les revendications dépendantes et de la description exposant ci-après l'invention plus en détail à l'aide de dessins.

Les dessins annexés illustrent schématiquement et à titre d'exemple le procédé et le dispositif de mesure selon l'invention.

La figure 1 est une vue schématique du cône externe à mesurer, du dispositif de mesure schématisé, et des valeurs acquises par la mesure, connues préalablement ou calculées en utilisant ces premières.

La figure 2 présente schématiquement une forme d'exécution d'un dispositif pour effectuer la mesure de cônes externes selon le procédé de l'invention.

L'invention sera maintenant décrite en détail en référence aux dessins annexés qui illustrent à titre d'exemple une forme d'exécution de l'invention.

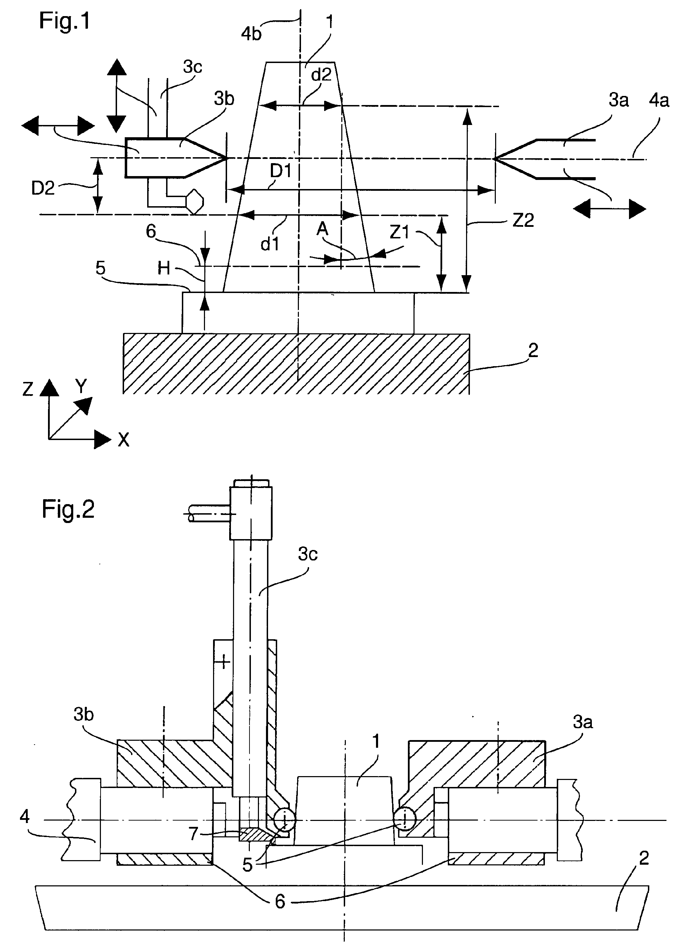

La figure 1 montre un cône externe 1 posé sur une table support 2 permettant des mouvements dans trois directions perpendiculaires représentés par le système de coordonnées cartésien (x, y, z). La coopération de deux palpeurs 3a et 3b assure la mesure dans la direction primaire (x) pour déterminer les diamètres du cône, un troisième palpeur 3c mesure dans la direction secondaire (z). Il est important que la précision de la mesure dans ces deux directions soit très haute et de même ordre de grandeur soit un à plusieurs centièmes de micromètre. La table support 2 et les palpeurs 3a et 3b disposent ensemble de trois directions perpendiculaires de mouvements relatifs, dont au moins lesdites deux directions (x, z) avec une très haute précision. En outre, un mouvement relatif entre la pièce à mesurer et les palpeurs 3a et 3b assure la répartition équilibrée de la force de mesure. Par leurs mouvements, la table et les palpeurs 3a et 3b permettent de mesurer avec une précision de même ordre de grandeur dans ces deux directions (x, z). Ces directions peuvent être orientées dans n'importe quel sens, notamment la direction primaire (x) peut être horizontale et la direction secondaire (z) soit verticale soit également horizontale.

Le procédé de mesure du cône externe comprend d'abord l'étalonnage relatif des palpeurs pendant lequel la distance D₁ entre les points de mesure des deux palpeurs 3a et 3b dans leur position initiale ainsi que la distance D₂ du troisième palpeur 3c dans sa position zéro par rapport à l'axe de mesure 4a de deux autres palpeurs est déterminé.

Le cône externe à mesurer est ensuite placé sur la table support 2 de manière précise et reproductible. Ceci est nécessaire afin de permettre le mesurage de séries de cônes externes.

Une itération des mouvements relatifs entre la table support 2 et les palpeurs 3a et 3b dans la troisième direction (y) accompagnée chaque fois par la détermination de la sécante du cône en rapprochant les deux palpeurs 3a et 3b jusqu'à ce qu'ils soient en contact avec la surface du cône ou déterminent selon le type de palpeur d'autre manière la position de cette surface permet de trouver les points de rebroussement dans le plan parallèle à la surface de la table support 2 dans une première position le long de la direction secondaire (z). La distance maximale mesurée entre les deux palpeurs 3a et 3b lors de cette procédure, les deux palpeurs étant en contact avec la surface du cône, correspond au diamètre primaire d₁ du cône externe.

Le mouvement du troisième palpeur 3c jusqu'à ce qu'il soit en contact avec le plan de référence 5 ou saisisse selon le type de palpeur d'une autre manière la position de ce plan permet de déterminer la distance z₁ entre ce plan de référence 5 et la première position le long de la direction secondaire (z) où le diamètre primaire d₁ a été mesuré. Cette distance z₁ = D₂ + Z_{mesure 1} correspond à la somme de la distance D₂ déterminée lors de l'étalonnage préalable et la distance mesurée entre la position zéro du troisième palpeur 3c et le plan de référence 5 lorsque la table support 2 est dans sa première position le long de la direction secondaire (z).

Un mouvement relatif entre la table support 2 portant la pièce à mesurer et l'axe de mesure 4a des deux palpeurs 3a et 3b selon la direction secondaire (z) permet ensuite de mesurer le diamètre du cône externe dans une deuxième position le long de cette direction.

Il est ainsi possible de mesurer un diamètre secondaire d₂ du cône externe dans une deuxième position le long de la direction secondaire (z) sans reprise de la pièce à mesurer. Ceci peut se faire soit en cherchant de nouveau les points de rebroussement de façon analogue à ce qui a été décrit ci-dessus en rapprochant les deux palpeurs 3a et 3b pendant des mouvements relatifs et itératifs entre la table support 2 et les palpeurs 3a et 3b selon la troisième direction (y), soit en supposant que la position des points de rebroussement le long de la troisième direction (y) est identique à celle dans la première position le long de la direction secondaire (z). Comme la table support 2 et les palpeurs 3a et 3b disposent ensemble d'une haute précision pour les mouvements dans les trois directions perpendiculaires, ce dernier cas sera normalement supposé, une re-détermination des points de rebroussement toutefois permettant de vérifier si la direction secondaire (z) mesurée est perpendiculaire à la direction primaire (x) dans les limites de la précision nécessaire et possible. Dans le cas d'un éventuel écart de perpendicularité entre les deux directions, par exemple à cause d'un écart entre l'axe du cône 4b et la direction secondaire (z) dans laquelle les mouvements relatifs entre la table support 2 et les palpeurs 3a et 3b sont effectuée, une correction correspondante peut être effectuée en utilisant les données mesurées lors des calculs des paramètres décrits ci-dessous. Le diamètre secondaire d₂ correspond naturellement à la distance maximale mesurée entre les deux palpeurs 3a et 3b, ces deux derniers étant en contact avec la surface du cône.

La distance z₂ entre le plan de référence 5 et la deuxième position le long de la direction secondaire (z) où le diamètre secondaire d₂ a été mesuré est déterminée de façon identique que la distance z₁, z₂ étant donnée par la somme z₂ = D₂ + Z_{mesure 2} correspondant à la somme de la distance D₂ déterminée lors de l'étalonnage préalable et la distance mesurée entre la position zéro du troisième palpeur 3c et le plan de référence 5 lorsque la table support 2 est dans sa deuxième position le long de la direction secondaire (z).

Les cônes externes de types ISO et HSK comportent normalement un plan de jauge 6, dont la distance H par rapport au plan de référence 5 est connue par fabrication avec une précision suffisante.

Connaissant ainsi les paramètres D₁ et D₂ par étalonnage, d₁, d₂, z₁ et z₂ par mesure, et H par fabrication, le calcul de l'angle du cône A = arctan [(d₁ - d₂) /(2*(z₂ - z₁))] est possible, permettant aussi de déterminer la position de la surface du cône externe par rapport au plan de jauge 6 en connaissant le paramètre H.

Ceci comprend toutes les informations nécessaires pour vérifier les caractéristiques de cônes externes. La liaison des cônes HSK à une broche se faisant tout à la fois par la face d'appui axiale et par la surface conique, la position relative de ces éléments géométriques est très importante et la mesure sans reprise avec une haute précision révèle ici tous ses avantages.

Il est évident que certaines étapes peuvent être échangées lors de ce procédé pour obtenir le même résultat. Notamment la mesure des distance entre les positions où les diamètres sont mesurés et le plan de référence peut être réalisée avant de mesurer les diamètres eux mêmes; l'étalonnage ne peut être fait qu'une seule fois seulement pour la mesure d'une série de cônes, soit tout au début du procédé soit à n'importe quel moment avant les calculs.

La figure 2 montre à titre d'exemple une forme d'exécution du dispositif de mesure correspondant. Le dispositif comprend comme éléments principaux une table support 2, deux palpeurs à bille 3a et 3b et un palpeur électronique 3c.

La table support 2 peut présenter, de préférence, un plateau horizontal ou un plateau vertical permettant de placer la pièce à mesurer 1 de façon précise et reproductible, ceci par exemple en prévoyant des orifices ou des embouts dans la table support 2. Ce plateau de la table support 2 peut exercer des mouvements dans trois directions perpendiculaires (x, y, z), dont au moins deux (x, z) avec une très haute précision correspondant à la précision de mesure des palpeurs.

Les deux palpeurs à bille 3a et 3b peuvent être montés en opposition et de façon coaxiale sur un banc de mesure linéaire 4 afin de permettre leur coopération pour la mesure des distances dans la direction primaire (x). Ils comportent chacun une bille en rubis 5 et une bride 6 utilisée pour monter le palpeur sur le banc de mesure. La forme de l'attache garantit la coaxialité entre le banc de mesure linéaire 4 et le palpeur 3a/b ainsi qu'entre les deux palpeurs. Les billes servent à saisir la surface du cône en arrêtant le palpeur dès qu'une force d'appui réglable et généralement légère est atteinte.

Un des palpeurs à bille est pourvu d'un palpeur électronique 3c. Le palpeur électronique 3c est logé dans le support de bille et orienté de manière à ce que son axe de mesure soit parallèle à la direction secondaire (z). Il comprend une touche de contact 7 pour saisir la position du plan de référence du cône afin de mesurer la distance entre ce plan et l'axe de mesure des deux palpeurs à bille ou, en général, une distance dans la direction secondaire (z).

Les palpeurs sont connectés électriquement de manière conventionnelle; les données mesurées sont enregistrées avec un appareil informatique et ensuite traitées par un logiciel afin de permettre les calculs comme un homme du métier sait le faire.

Il est évident que la description de cette forme particulière d'exécution d'un dispositif pour la mesure de cônes n'est pas limitatif; il est notamment possible d'utiliser d'autres types de palpeurs au lieu des palpeurs à bille ou d'un palpeur électronique pour réaliser le palpage de la surface du cône externe.

## Revendications

1. Procédé pour la mesure de cônes externes, **caractérisé par le fait qu'**il comprend les étapes suivantes :
a. le placement de façon précise et reproductible de la pièce à mesurer (1) sur une table support (2) installée entre deux palpeurs (3a, 3b), qui sont placés en opposition et de façon coaxiale et parallèle à une direction primaire (x) de chaque côté de la pièce à mesurer (1), la table support (2) et les deux palpeurs (3a, 3b) disposant ensemble de trois directions perpendiculaires (x, y, z) de mouvement relatif, dont au moins les directions primaire (x) et secondaire (z) avec une très haute précision,
b. une itération des mouvements relatifs entre la table support (2) et lesdits deux palpeurs (3a, 3b) dans la troisième direction (y) accompagnée chaque fois par la détermination de la sécante du cône externe (1) dans le plan parallèle à la surface de la table support (2) en rapprochant lesdits deux palpeurs (3a, 3b) jusqu'à ce qu'ils soient en contact avec la surface du cône externe (1) ou déterminent selon le type de palpeur d'autre manière la position de cette surface afin de trouver les points de rebroussement dans une première position le long de la direction secondaire (z), la distance maximale mesurée pour ladite sécante entre les deux palpeurs (3a, 3b) lors de cette procédure correspondant au diamètre primaire (d₁) du cône externe,
c. un mouvement d'un troisième palpeur (3c) selon la direction secondaire (z) jusqu'à ce qu'il soit en contact avec le plan de référence (5) ou saisisse selon le type de palpeur d'une autre manière la position de ce plan permettant de déterminer la distance (z₁) entre ce plan de référence (5) et la première position le long de la direction secondaire (z) où le diamètre primaire (d₁) a été mesuré,
d. un mouvement relatif entre la table support (2) portant la pièce à mesurer et l'axe de mesure (4a) des deux palpeurs placés en opposition (3a, 3b), selon la direction secondaire (z) afin de mesurer le diamètre du cône externe (1) dans une deuxième position le long de cette direction sans reprise de la pièce à mesurer,
e. la mesure dudit diamètre secondaire (d₂) en rapprochant comme décrit ci-dessus les deux palpeurs (3a, 3b) placés de façon coaxiale, le diamètre secondaire (d₂) correspondant à la distance maximale mesurée entre ces deux palpeurs (3a, 3b) lors de cette procédure,
f. la détermination de la distance (z₂) entre le plan de référence (5) et la deuxième position le long de la direction secondaire (z) où le diamètre secondaire (d₂) a été mesuré de façon analogue à ce qui a été décrit ci-dessus en utilisant le troisième palpeur (3c) pour saisir le plan de référence (5) du cône externe (1) et,
g. le calcul des paramètres intéressants permettant d'obtenir l'angle du cône (A= arctan [(d₁ - d₂)/ (2*(z₂ - z₁))]) et la position relative des éléments géométriques importants comme la surface du cône externe (1) par rapport au plan de jauge (6) en connaissance des paramètres déterminants mesurés ou connus par fabrication (d₁, d₂, z₁, z₂ et H).

2. Procédé selon la revendication 1, **caractérisé par le fait que** les étapes peuvent être échangées, notamment dans le sens que les étapes b et c et/ou e et f sont échangées.

3. Procédé selon la revendication 1 ou 2, **caractérisé par le fait qu'**il comprend avant toute opération de mesure un étalonnage de la distance (D₁) entre les points de mesure des deux palpeurs (3a, 3b) arrangés de façon coaxiale dans leur position initiale ainsi que de la distance (D₂) du troisième palpeur (3c) dans sa position zéro par rapport à l'axe de mesure (4a) des deux autres palpeurs.

4. Procédé selon l'une des revendications 1 à 3, **caractérisé par le fait qu'**il comprend dans l'étape pour déterminer le diamètre secondaire (d₂) du cône externe (1) dans une deuxième position le long de la direction secondaire (z) encore une détermination des points de rebroussement de façon analogue à ce qui a été décrit ci-dessus en rapprochant les deux palpeurs arrangés de façon coaxiale (3a, 3b) pendant des mouvements relatifs et itératifs entre la table support (2) et lesdits deux palpeurs (3a, 3b) selon la troisième direction (y) afin de vérifier que la position de ces points de rebroussement par rapport à la troisième direction (y) dans le deuxième plan de mesure parallèle à la surface de la table support (2) est identique à celle dans le premier plan de mesure, un éventuel écart de ces positions relevant un écart entre l'axe du cône externe (4b) et la direction secondaire (z) dans laquelle les mouvements relatifs entre la table support (2) et les deux palpeurs (3a, 3b) sont effectués et permettant ainsi une correction correspondante en utilisant les données mesurées lors des calculs des paramètres décrits ci-dessus.

5. Dispositif de mesure de cônes externes comportant comme éléments principaux une table support (2) et trois palpeurs (3a, 3b, 3c), **caractérisé par le fait que** la table support (2) présente un plateau pour placer la pièce à mesurer (1) de façon précise et reproductible, ce plateau de la table support (2) pouvant exercer des mouvements dans trois directions perpendiculaire (x, y, z), dont au moins dans la direction primaire (x) et la direction secondaire (z) avec une très haute précision correspondant à la précision de mesure des palpeurs, **par le fait que** le palpeur primaire (3a) et le palpeur secondaire (3b) sont montés en opposition et de façon coaxiale sur un banc de mesure linéaire (4) afin de permettre leur coopération pour la mesure des distances dans la direction primaire (x), et **par le fait que** le troisième palpeur (3c) est destiné à mesurer des distances dans la direction secondaire (z) perpendiculaire à ladite direction primaire (x).

6. Dispositif selon la revendication 5, **caractérisé par le fait que** le plateau de la table support (2) est orienté horizontalement ou verticalement.

7. Dispositif selon la revendication 5 ou 6, **caractérisé par le fait que** chacun des palpeurs primaire et secondaire comporte une bille en rubis (5) servant à saisir la surface du cône externe (1) en arrêtant le palpeur à bille dès qu'une force d'appui réglable est atteinte, et une bride (6) utilisée pour monter le palpeur sur le banc de mesure linéaire (4), la forme de l'attache garantissant la coaxialité entre le banc de mesure linéaire (4) et le palpeur à bille (3a/b) ainsi qu'entre les deux palpeurs à billes.

8. Dispositif selon l'une des revendications 5 à 7, **caractérisé par le fait que** le troisième palpeur (3c) est logé dans le support du palpeur primaire ou secondaire (3a/b) et orienté de manière à ce que son axe de mesure soit parallèle à la direction secondaire (z), et **par le fait qu'**il comporte une touche de contact (7) pour saisir la position du plan de référence du cône afin de mesurer la distance entre ce plan et l'axe de mesure des palpeurs primaire et secondaire ou, en général, une distance dans la direction secondaire (z).

9. Dispositif selon l'une des revendications 5 à 8, **caractérisé par le fait que** le troisième palpeur (3c) est un palpeur électronique.
